# EUROPÄISCHE PATENTSCHRIFT

(11) **EP 0 654 111 B1**
(45) Veröffentlichungstag und Bekanntmachung des Hinweises auf die Patenterteilung: **14.02.1996**
(21) Anmeldenummer: 93912961.5
(22) Anmeldetag: 14.06.1993
(51) Int. Cl.: E04C 2/54, E04B 7/14

(54) **KONSTRUKTIONS-BAUELEMENT FÜR DIE VERGLASUNG VON BAUTEN**
STRUCTURAL COMPONENT FOR GLAZING BUILDINGS
ELEMENT DE CONSTRUCTION PERMETTANT D'EFFECTUER LE VITRAGE DE BATIMENTS

(30) Priorität: 21.07.1992 DE 4223694
(43) Veröffentlichungstag der Anmeldung: 24.05.1995
(73) Patentinhaber: DANZ, Robert, D-71101 Schönaich (DE)
(72) Erfinder: DANZ, Robert, D-71101 Schönaich (DE)
(74) Vertreter: Böhmer, Hans Erich, Dipl.-Ing.
(86) Internationale Anmeldenummer: EP9301491
(87) Internationale Veröffentlichungsnummer: WO9402696

(56) Entgegenhaltungen:
- EP-A- 0 277 535
- DE-A- 3 927 653
- TECHNIQUES & ARCHITECTURE Bd. 364, 1986, PARIS Seiten 74 - 96 ALAIN PELISSIER: "cite des siences et de l'industrie - naissance d'un monument"

## Beschreibung

Die Erfindung betrifft ein Konstruktions-Bauelement für die großflächige Verglasung von bauten, beispielsweise für Wartehallen, für Vordächer, für Galerien, Bahnhofshallen, Ausstellungshallen und dergleichen.

Dabei hat sich gezeigt, daß mit den bisher bekannten Befestigungsmitteln keine ganz befriedigenden Lösungen erarbeitet werden konnten.

Der Erfindung liegt der Gedanke zugrunde, das aus der allgemeinen Statik bekannte System des unterspannten Trägers auch auf großflächige Glastafeln aus Verbund-Sicherheitsglas anzuwenden. Dabei sollte dieses Prinzip für jede beliebige Ausrichtung einer Vielzahl von solchen Glastafeln brauchbar sein. Das war aber mit den bisher bekannten Befestigungsmitteln nicht möglich

Der Grund für diese Schwierigkeit liegt darin, daß Verbund-Sicherheitsglastafeln vor ihrem Zusammenkleben aus zwei oder mehr Scheiben für die Befestigungsmittel mit Bohrungen versehen werden müssen, die, wie die Erfahrung zeigt, eben oft nach dem Verkleben der Scheiben nicht genau miteinander ausgerichtet sind. Auch können beim Bohren der Scheiben Toleranzen nicht vermieden werden.

Außerdem ist es erwünscht, die Bohrungen für die beiden Scheiben oder für mehr als zwei Scheiben einer Verbund-Sicherheitsglastafel für einen Toleranzausgleich etwas größer zu bemessen.

Würde man für die Befestigung von Glastafeln dieser Art bekannte Glashalteelemente verwenden, dann ließe sich dies nur bei kleineren Glastafeln und nur bei waagerechter Lage verwirklichen. Großflächige Glastafeln aus Verbund-Sicherheitsglas mit bis zu 15 m Fläche lassen sich alleine wegen ihrer Größe und ihres Gewichtes so nicht verlegen, insbesondere auch nicht in einer Schräglage.

Aufgabe der Erfindung ist es daher, einen Lösungsweg aufzuzeigen, durch den eine großflächige Verglasung von Bauten mit Glastafeln aus Verbund-Sicherheitsglas ermöglicht wird.

Dies wird erfindungsgemöß durch die Merkmale des Patentanspruchs 1 in seiner Gesamtheit erreicht.

Weitere Merkmale der Erfindung sind den weiteren Ansprüchen zu entnehmen. Dazu ist zu bemerken, daß bei Verwendung von form- und kraftschlüssig in Bohrungen der Glastafeln verankerten Glashalteelementen und daran befestigten Stabankern mit den zugehörigen Stäben als unterspannende Streben bzw. Stützstreben man in allen Teilen einschließlich der Glastafeln eine Zug- und Druckbelastungen auffangende Konstruktion erhält.

Selbst die unter einem spitzen Winkel zur Glastafel angreifenden unterspannenden Streben sind mit der Glastafel über die Glashalteelemente in der neuen Ausgestaltung so kraft- und formschlüssig verbunden, daß alle Kräfte bei Druck auf die Glastafel oder bei an der Glastafel angreifendem Sog aufgenommen werden können. D.h., auch die Stützstrebe wird einmal auf Zug und einmal auf Druck beansprucht.

Die Erfindung wird nunmehr anhand von Ausführungsbeispielen in Verbindung mit den beigefügten Zeichnungen näher beschrieben.

In den Zeichnungen zeigt:
- Fig. 1: eine Prinzipdarstellung des erfindungsgemäßen Bauelementes;
- Fig. 1a, 1b und 1c: Einzelteile dieser Konstruktion
- Fig. 2: ein weiteres Ausführungsbeispiel der Erfindung;
- Fig. 3: eine erste Ausführungsform der Befestigung eines Glashalteelementes an einer Glastafel;
- Fig. 4: eine weitere Ausführungsform der Befestigung des Glashalteelementes an der Glastafel und
- Fig. 5: eine andere Befestigungsart eines Glashalteelementes für eine abgehängte Glastafel.

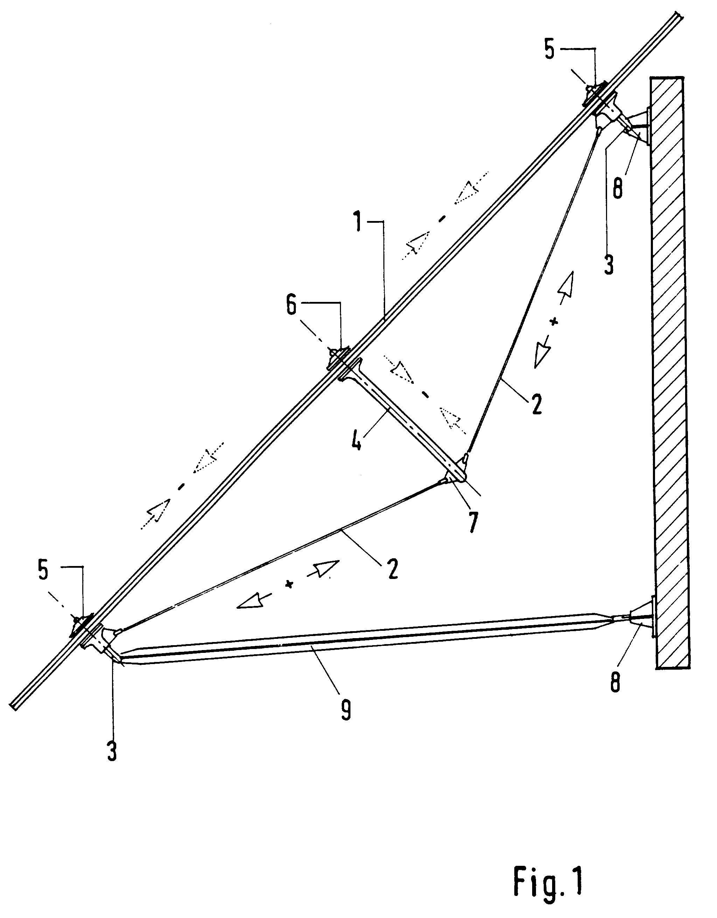

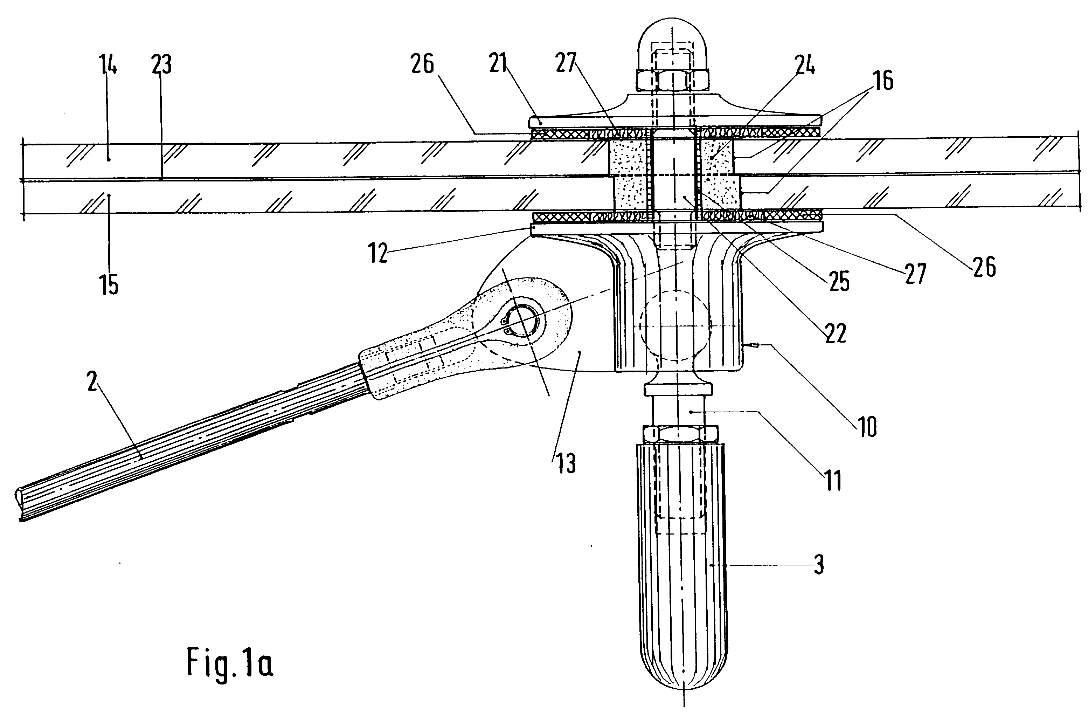

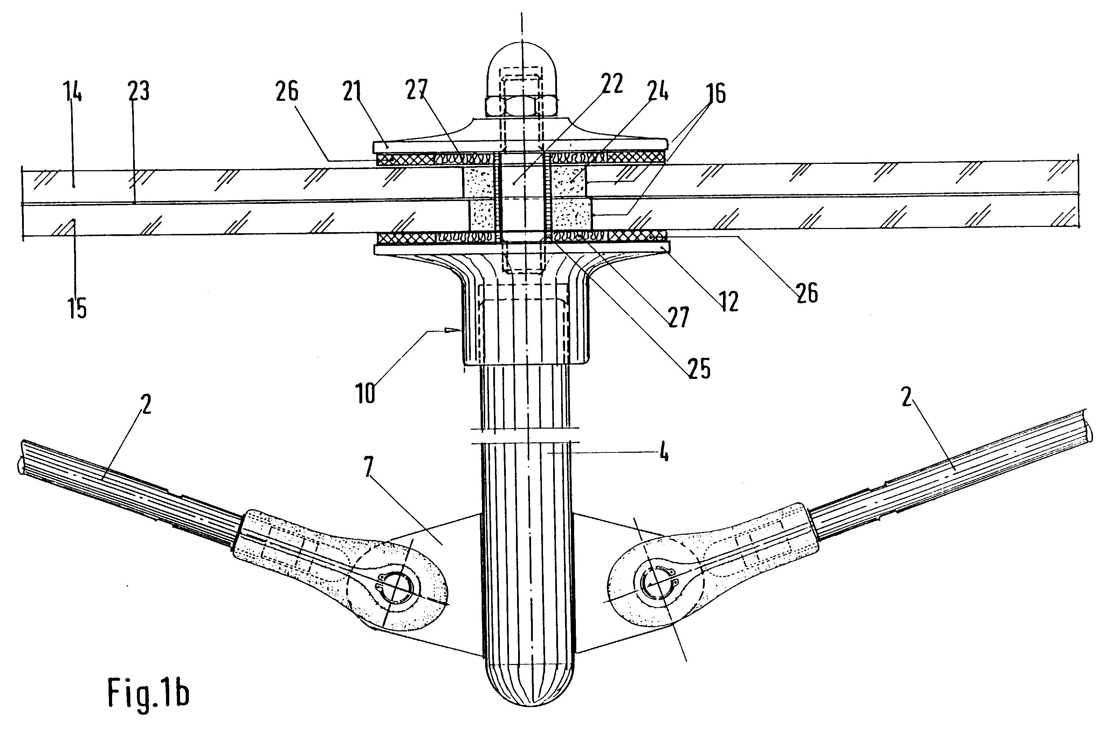

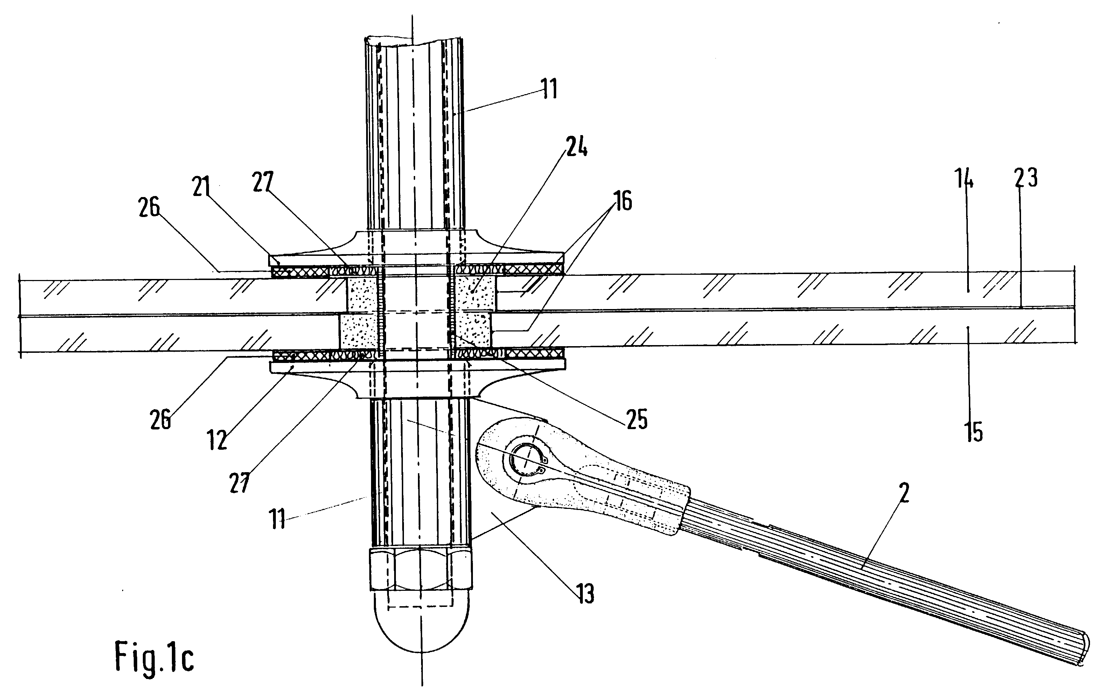

Das bei großflächigen und daher schweren, sich durch ihr Eigengewicht durch-biegenden Glastafeln aus Verbund-Sicherheitsglas ergebende Problemn soll zunächst anhand der Fig. 1 erläutert werden.

Eine großflächige Glastafel 1 aus Verbund-Sicherheitsglas ist durch zwei die Glastafel unterspannende Streben 2 Uber eine Stützstrebe 4 abgestützt. Die Verbindung der unterspannenden Streben 2 mit der Glastafel 1 wird durch Glashalteelemente 5 bewirkt, die in ihrer Ausgestaltung noch näher erläutert werden sollen.

Wichtig ist hierbei, daß die Befestigung der Glastafeln wegen der dort unweigerlich auftretenden Zwängungskräfte nicht an den Ecken oder in den Randzonen erfolgen kann. Vielmehr sollte, wie in Fig. 1 schematisch angedeutet, die Befestigung möglichst an Stellen minimaler Verformung der Glastafel vorgenommen werden, d.h. an Stellen, an denen sich eine homogene Belastung der Glastafeln ergibt.

Die Stützstrebe 4 ist mittels einer Doppelaugenlasche 7 mit den unterspannenden Streben 2 verbunden. Die ganze Konstruktion der hier schräg angeordneten Glastafel 1 ist an Wandkonsolen 8 befestigt und über eine weitere Strebe 9 gegen die Wand abgestützt. Die Verbindung wird dabei durch Auflager 3 hergestellt,die mit den Glashalteelementen 5 verbunden sind. Dies wird noch erläutert.

Man erkennt sofort, daß in den Streben 2 und 4 sowie 9 und, was ganz wichtig ist, in der Glastafel selbst Zug- und Druckkräfte auftreten, wie sie durch Pfeile angedeutet sind und zwar einmal verursacht durch das Gewicht der Glastafel von bis zu 900 kg, sowie durch Windlast, Schneelast, Regen oder aber auch durch Sog, der so stark sein kann, daß der auf der Stützstrebe 4 lastende Druck überkompensiert wird und eine resultierende Zugkraft auftritt.

Diese Kräfte müssen aber an allen Befestigungspunkten von der Glastafel 1 kraft- und formschlüssig aufgenommen werden. Das wäre unter den eingangs genannten Bedingungen der größeren und ggf. gegeneinander versetzten Bohrungen der die Glastafel bildenden Scheiben nicht möglich, da die Bolzen der Glashalteelemente härter sind als das Glas der Scheiben, so daß bei unmittelbarer Berührung zwischen den Scheiben und dem Bolzen die Gefahr besteht, daß die Scheiben zerbrechen. Außerdem soll auch nach der Montage ein Toleranzausgleich möglich sein. Wie dies gelöst ist, zeigen schematisch die Figuren 1a bis 1c.

Fig. 1a zeigt die Befestigung des Glashalteelementes 10 in der Position in Fig. 1 bei 5 rechts oben. Man erkennt dabei ein Glashalteelement, wie es im Prinzip für eine biegemomentfreie Lagerung von Wand- oder Deckenplatten in der DE-A 39 27 653.8 offenbart ist.

Ein mit einem Außengewinde versehener Tragbolzen 11 des Glashalteelements 10 ist in das mit Innengewinde versehene Auflager 3 eingeschraubt. Hier ergibt sich eine erste Möglichkeit für einen Toleranzausgleich gegen die obere Wandkonsole 8.

Das Glashalteelement 10 weist einen ersten unteren Auflageteller 12 auf sowie ein seitlich angesetztes Auge 13 für einen Stabanker mit daran befestigtem, als unterspannende Strebe 2 dienenden Zugstab. Zwei die Glastafel aus Verbund-Sicherheitsglas bildende Glasscheiben 14, 15 liegen normalerweise auf dem Auflageteller 12 auf. Es empfiehlt sich jedoch, einen äußeren Neoprenring 26 mit einer Shore-Härte von etwa 80 und einen inneren Silikongummiring 27 mit einer Shore-Härte von etwa 40 dazwischenzulegen. Man erkennt außerdem deutlich die Ränder 16 der gegeneinander etwas versetzten Bohrungen in den Glasscheiben 14 und 15, die durch eine Klebeschicht 23 miteinander verbunden sind.

Die Bohrungen sind erheblich größer als dies für die eigentliche Befestigung erforderlich wäre. Dies kommt dem späteren Toleranzausgleich zugute.

Die Befestigung erfolgt durch einen zweiten Auflageteller 21, der mittels eines Gewindebolzens 22, der in den Auflageteller 12 einschraubbar ist, und einer darauf aufgesetzten Hutmutter angedrückt werden kann. Schraubenbolzen und Hutmutter können auch aus einem Stück bestehen. Auch hier empfiehlt sich die Zwischenlage eines äußeren Neoprenringes 26 mit Shore-Härte 80 und eines inneren Silikongummiringes mit Shore-Härte 40.

Für die Montage ist die Reibung, die durch das Zusammenpressen der Auflageteller 12 und 21 über die Neoprenringe erreicht wird, zunächst ausreichend, um die Glastafel zu fixieren und trotzdem eine nachträgliche Justierung zu ermöglichen.

Der Gewindebolzen 22 ist noch von einer Hülse 25 umgeben.

Ist die Glastafel so weit fertig montiert, wird der Hohlraum zwischen den Kanten der beiden die Glastafel bildenden Scheiben 14 und 15 und der den Gewindebolzen 22 umgebenden Hülse 25 mit einem pastösen Zweikomponentenkunststoff ausgefüllt, der innerhalb von etwa 24 Stunden bis zu einer Shore-Härte von etwa 80 aushärtet und danach eine, wenn auch eng begrenzte, Fließfähigkeit beibehält. D.h. nach Einbringen dieses Kunststoffes kann ein endgültiger Fein-Toleranzausgleich vorgenommen werden, wonach dann die Befestigungsbolzen fest angezogen werden können.

Wenn der Kunststoff 24 voll ausgehärtet ist, besteht zwischen den Glasplatten 14, 15 der Glastafel 1 und dem Glashalteelement eine form- und kraftschlüssige Verbindung. Mit anderen Worten ist diese Verbindung zwischen der Glastafel 1 aus Sicherheits-Verbundglas und dem Glashalteelement in der Lage, sämtliche Zug- und Druckkräfte, wie sie in Fig. 1 angedeutet sind, aufzunehmen.

Dabei ist der härtere Neoprenring 26 für die Andruckkräfte und Auflagekräfte aus der Biegung der Glastafel zuständig, während der weichere Silikongummiring für die Materialtrennung zwischen Metall/Auflageteller 12, 21 und dem Zwei-Komponentenepoxydharz 24 vorgesehen ist. Die Hülse 25 dient ebenfalls der Trennung des Metalls des Gewindebolzens 22 von dem ausgehärteten Zwei-Komponentenepoxydharz 24.

Zusätzlich wird das Auftreten von Zwängung und Einspannkräften an den Auflagetellern vermieden. Schließlich sei noch darauf hingewiesen, daß das in dem Glashalteelement 10 angedeutete Kugelgelenk eine biegemomentfreie Lagerung der Glastafel sicherstellt.

Diese Konstruktion hat außerdem den beachtlichen Vorteil, daß sich im Schadensfall das Glashalteelement 10 leicht ausbauen und wieder verwenden läßt.

Fig. 1b zeigt die Befestigung der Glastafel anstelle des Glashalteelementes 6 in Fig. 1. Gleiche Teile sind wiederum mit den gleichen Bezugszeichen versehen und bedürfen keiner näheren Erläuterung.

An der Stützstrebe 4 ist eine Doppelaugenlasche 7 für Stabanker befestigt, vorzugsweise angegossen oder angeschweißt. Sie dient der Aufnahme von zwei Stabankern für die Aufnahme von die unterspannenden Streben 2 bildenden Zugstäben .

Fig. 1c zeigt die Befestigung des Glashalteelementes 10 am Ort des unteren Glashalteelementes 5 in Fig. 1. Hier ist in Verbindung mit dem Glashalteelement eine Augenlasche 13 für einen Stabanker für die Aufnahme eines Zugstabes vorgesehen, der die zweite unterspannende Strebe 2 bildet. Die übrigen Teile sind mit den gleichen Bezugszeichen versehen und bedürfen keiner weiterenErläuterung.

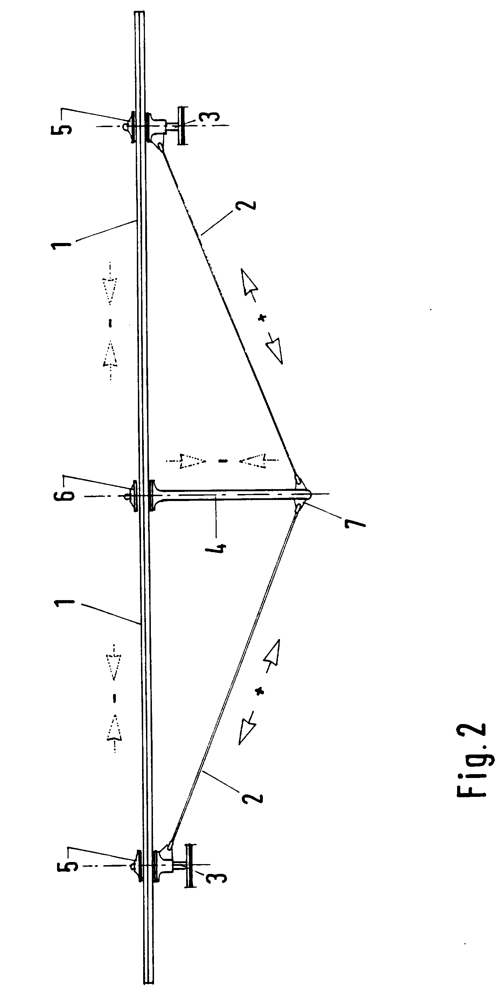

Fig. 2 zeigt schematisch die Befestigung einer aus Verbund-Sicherheitsglas bestehendenGlas-tafel mit einer Fläche von etwa 15 m und einem Gewicht von etwa 900 kg. Eine derartig große und schwere Glas tafel kann auf diese Weise sicher befestigt werden. Diese Konstruktion ist in der Lage, alle hier eingezeichneten Zug- und Druckkräfte aufzunehmen. Gleiche Teile sind wiederum mit den gleichen Bezugszeichen versehen wir in Fig. 1.

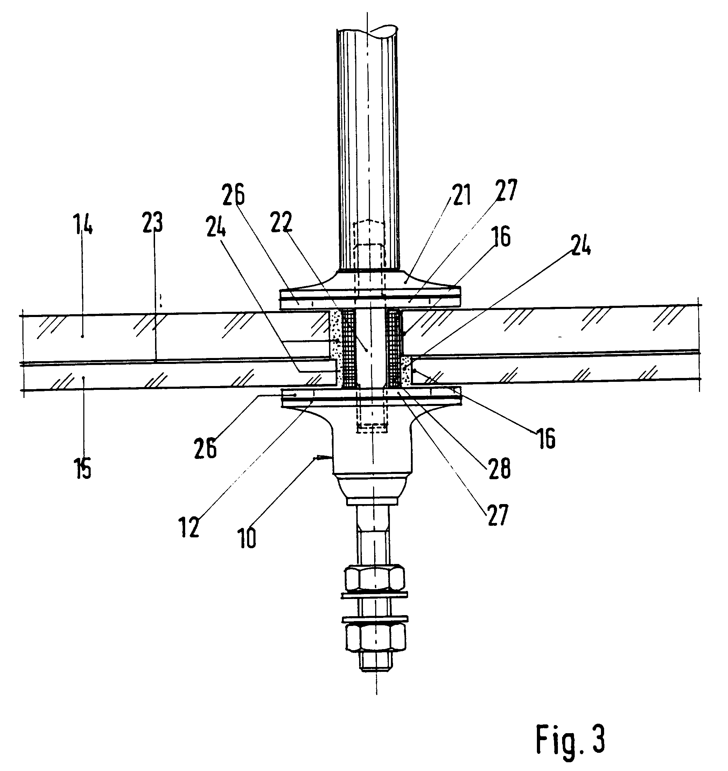

Fig. 3 zeigt eine weitere Befestigungsart, die einer näheren Erl äuterung nicht bedarf. Gleiche Teile weisen die gleichen Bezugszeichen auf wie die Figuren 1a bis 1c. Die Hutmutter oberhalb des Auflagetellers 21 ist jedoch durch einen mit einem Innengewinde versehenen, auf den Schraubenbolzen 11 aufgeschraubten Zugstab oder Druckstab ersetzt.

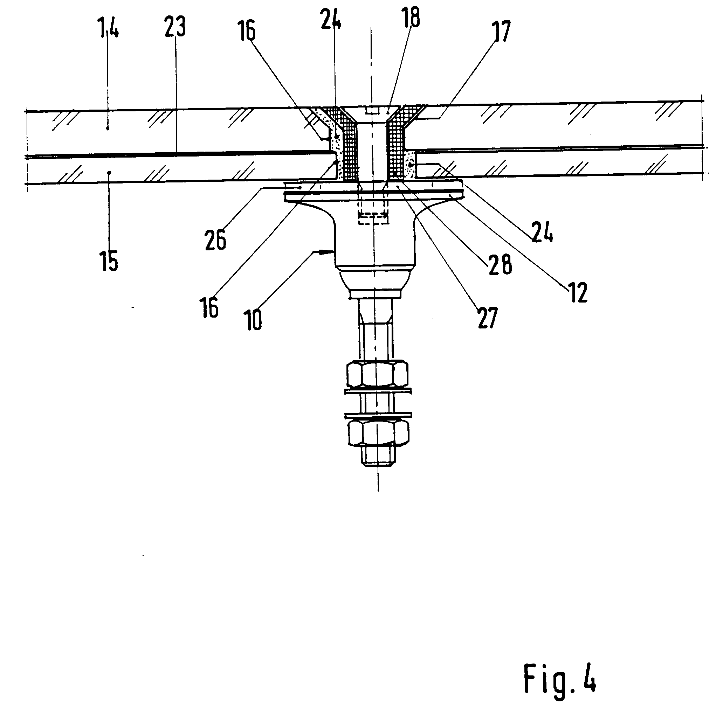

Eine weitere Ausführungsform zeigt Fig. 4. Gleiche Teile sind mit den gleichen Bezugszeichen versehen wie in Fig. 3. In der oberen Glasplatte 14 der Glastafel ist eine kegelstumpfförmige Erweiterung 17 vorgesehen, in die eine entsprechend geformte Kunststoffhülse 28 eingesetzt ist. Durch diese Kunststoffhülse hindurch ist eine Senkkopfschraube 18 in das Innengewinde des Auflagetellers 12 eingeschraubt. Der Zwischenraum zwischen den Kanten der die Glastafel bildenden Glasplatten 14 und 15 ist wiederum durch den Zwei-Komponentenkunststoff 24 ausgefüllt. Im übrigen ist die Konstruktion die gleiche wie zuvor. Damit ergibt sich ein nach außen glatter Abschluß.

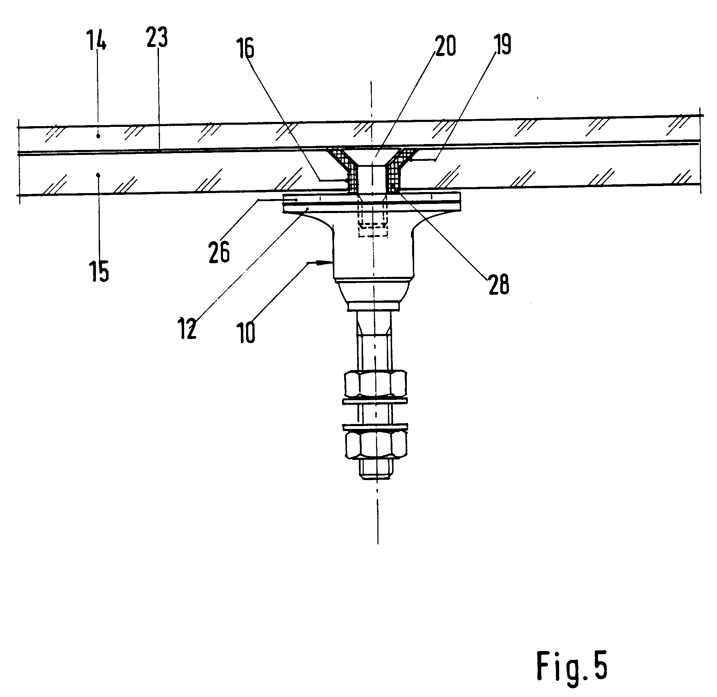

Eine letzte Ausführungsform zeigt Fig. 5. Auch hier sind gleiche wesentliche Teile mit den gleichen Bezugszeichen versehen wie zuvor. In diesem besonderen Fall wird die Glastafel erst nach der Befestigung durch Verkleben der beiden Glasplatten 14 und 15 durch die Klebeschicht 23 hergestellt.

In der unteren Glasplatte 15 ist eine kegelstumpfförmige Erweiterung 19 vorgesehen, in die eine entsprechend geformte Kunststoffhülse 28 eingesetzt ist, durch die eine kurze Senkkopfschraube 20 in den Auflageteller 12 eingeschraubt werden kann. Etwa vorhandene Zwischenräume zwischen der Kunststoffhülse 28 und den Kanten 16 der Glasplatte 15 können, allerdings hier nicht dargestellt, ebenfalls mit dem Zwei-Komponentenkunststoff 24 ausgefüllt werden.

Durch diese neue Konstruktion lassen sich großflächige schwere Glastafeln für Vordächer, Hallendächer und ähnliches mit Sicherheit einbauen, was mit den bisher bekannten Konstruktionen nicht möglich war. Es sei ausdrücklich darauf hingewiesen, daß die Erfindung nicht auf Glastafeln beschränkt ist, die aus zwei Glasplatten bestehen, die miteinander verklebt sind. Die Erfindung ist in gleicher Weise auch auf Dreifach-Verbundsicherheitsglas anwendbar. Wichtig ist vor allen Dingen, daß die Befestigung nicht im Bereich der Kanten oder Ecken der Glastafel erfolgt sondern in Bereichen minimaler Verformung der Glastafel, d.h. an den Stellen, an denen sich eine homogene Belastung der Glastafel ergibt.

## Patentansprüche

1. Konsfruktions-Bauelement für die Verglasung von Bauten mit Glastafeln (1) aus Verbund-Sicherheitsglas unter Verwendung von Glashalteelementen (5, 6; 10) mit mindestens einem Auflageteller (12) für mit Bohrungen versehene Glastafeln mit Toleranzausgleich, sowie mit diesen zusammenwirkenden befestigungsmitteln, gekennzeichnet durch mindestens eine Glastafel (1) und diese unterspannende mit der Glastafel über Glashalteelemente (5, 6; 10) verbundene, unter einem spitzen Winkel gegen die Ebene der Glastafel angreifende Streben (2) sowie durch eine am Verbindungspunkt der beiden Streben angeordnete Stützstrebe (4), die ebenfalls über ein Glashalteelement (6) mit der Glas tafel verbunden ist, wobei die Befestigung der Streben (2, 4) mit der Glastafel Uber die Glashalteelemente derartig Form-und kraftschlüssig ausgestaltet ist, daß die unterspannenden Streben (2), die Stüfzstrenben (4) und die Glastafel (1) auf Zug und auf Druck beanspruchbar sind.

2. Bauelement nach Anspruch 1, dadurch gekennzeichnet, daß die kraft- und Formschlüssige Verbindung zwischen der Glastafel und den Glashalteelementen dadurch hergestellt ist, daß ein noch vorhandener Zwischenraum zwischen Kanten (16) der Bohrungen in den Glastafeln (1) und einem die Glashalteelemente durchsetzenden Gewindebolzen (22) mit einem begrenzt fließfähigen Kunststoff (24) vollständig ausgefüllt ist, dessen Endhärte nach Auspolymerisation geringer ist als die Härte der Glastafeln.

3. Bauelement nach Anspruch 1 und 2, dadurch gekennzeichnet, daß als Befestigungselement in Verbindung mit den Glashalteelementen ein zweiter mit einem Schraubenbolzen (22) versehener Auflageteller (21) vorgesehen ist, wobei der Schraubenbolzen in eine Bohrung des erstgenannten Auflagetellers (12) einschraubbar ist.

4. Bauelement nach Anspruch 1 bis 3, dadurch gekennzeichnet, daß zwischen den Auflagetellern (12, 21) und den die Glastafel (1) bildenden Glasplatten (14, 15) jeweils ein Neoprenring (26) mit einer Shore-Hörte von etwa 80 angeordnet ist.

5. Bauelement nach Anspruch 4, dadurch gekennzeichnet, daß zwischen den Auflagetellern (12, 21) und den die Glastafel bildenden Glasplatten (14, 15) sowie dem Zwei-Komponentenkunststoff (24) innerhalb der Neoprenringe (26) Silikongummiringe (27) mit einer Shore-Härte von etwa 40 angeordnet sind.

6. Bauelement nach Anspruch 2 bis 5, dadurch gekennzeichnet, daß der das Glashalteelement (10) durchsetzende Gewindebolzen (22) zur Trennung von dein Zwei-Komponentenkunststoff (24) von einer Kunststofflülse (25) umgeben ist.

7. Bauelement nach den Ansprüchen 1 bis 6, dadurch gekennzeichet, daß in der außenliegenden Scheibe (14) der aus zwei miteinander durch eine Klebeschicht (23) verbundenen Scheiben (14, 15) bestehenden Glastafel (1) eine kegelstumpfförmige Erweiterung (17) vorgesehen ist, in die eine entsprechend geformte Kunststoffhülse (28) eingesetzt ist, und daß als Befestigungselement eine diese Hülse durchsetzende Senkkopfschraube vorgesehen ist, die in den Auflageteller (12) einschraubbar ist.

8. Bauelement nach den Ansprüchen 1 bis 6, dadurch gekennzeichnet, daß die innenliegende Scheibe (15) der aus zwei miteinander durch eine Klebeschicht (23) verbundenen Scheiben (14,15) bestehenden Glastafel (1) eine kegelstumpfförmige Erweiterung (19) aufweist, in die eine entsprechend geformte Kunststoffhulse (28) eingesetzt ist, daß als Befestigungselement eine nur diese Kunststoffhülse und diese Scheibe durchsetzende Senkkopfschraube (20) vorgesehen ist, die in die Gewindebohrung des Auflagetellers (12) einschraubbar ist, und daß die außenliegende oder Deckscheibe (14) der Verbund-Sicherheitsglastafel (1) nach erfolgter Befestigung mittels der Klebeschicht (23) mit der innenliegenden Scheibe (15) verbunden ist.

9. Bauelement nach einem der Ansprüche 1 bis 8, dadurch gekennzeichnet, daß die Verbindung der unterspannenden Streben (2) mit der Glas tafel (1) durch die Glashalteelemente (5; 10) in Bereichen minimaler Verformung bei homogener Belastung der Glastafel (1) angeordnet ist.

## Claims

1. Constructional element for glazing building structures with glass sheets (1) made of laminated safety glass using glass retaining elements (5, 6; 10) with at least one support plate (12) for glass sheets provided with holes with tolerance compensation as well as fixing means interacting with these, characterized by at least one glass sheet (1) and under-spanning struts (2) which are connected with the glass sheet by means of glass retaining elements (5, 6; 10) and which act against the plane of the glass sheet at an acute angle, and by a support strut (4) located at the connection point of the two struts, said support strut also being connected with the glass sheet by means of a glass retaining element (6), whereby fixing of the struts (2, 4) with the glass sheet by way of the glass retaining elements is designed in the form of a positive and non-positive connection such that the under-spanning struts (2), support strut (4) and glass sheet (1) are capable of being subjected to tension and pressure forces.

2. Constructional element in accordance with claim 1, characterized in that the non-positive and positive connection between the glass sheet and glass retaining elements is produced by completely filling a still existing space between the edges (16) of the holes in the glass sheets (1) and a threaded bolt (22) inserted through the glass retaining elements with a plastic (24) with limited flowability, whereby the final hardness of said plastic after the end of polymerization is lower than the hardness of the glass sheets.

3. Constructional element in accordance with claims 1 and 2, characterized in that a second support plate (21) provided with a screw bolt (22) is used as a fixing element in conjunction with the glass retaining elements, whereby the screw bolt can be screwed into a hole in the first support plate (12).

4. Constructional element in accordance with claims 1 to 3, characterized in that one neoprene ring (26) in each case with a Shore hardness of around 80 is located between the support plates (12, 21) and the glass panes (14, 15) forming the glass sheet (1).

5. Constructional element in accordance with claim 4, characterized in that silicone rubber rings (27) with a Shore hardness of approx. 40 are located between the support plates (12, 21) and the glass panes (14, 15) forming the glass sheet and the two-component plastic (24) inside the neoprene rings (26).

6. Constructional element in accordance with claims 2 to 5, characterized in that the threaded bolt (22) which penetrates the glass retaining element (10) is surrounded by a plastic sleeve (25) for the purpose of separation from the two-component plastic (24).

7. Constructional element in accordance with claims 1 to 6, characterized in that a truncated-cone extension (17) is provided in the outer pane (14) of the glass sheet (1) consisting of two panes (14, 15) bonded together by means of an adhesive layer (23), whereby a correspondingly shaped plastic sleeve (28) is inserted in said extension, and in that a countersunk-head screw which passes through the sleeve is provided as a fixing element, whereby said screw can be screwed into the support plate (12).

8. Constructional element in accordance with claims 1 to 6, characterized in that the inner pane (15) of the glass sheet (1) consisting of two panes (14, 15) bonded together by means of an adhesive layer (23) possesses a truncated-cone extension (19), into which a correspondingly shaped plastic sleeve (28) is inserted, in that a countersunk-head screw (20) which passes through only this plastic sleeve and this pane is provided as a fixing element, whereby said screw can be screwed into the threaded hole of the support plate (12), and in that the outer or top pane (14) of the laminated safety glass sheet (1) is bonded with the inner pane (15) by means of the adhesive layer (23) after fixing.

9. Constructional element in accordance with one of claims 1 to 8, characterized in that the connection of the under-spanning struts (2) with the glass sheet (1) by means of the glass retaining elements (5; 10) is located in areas of minimum deformation with homogeneous loading of the glass sheet (1).

## Revendications

1. Elément de construction pour le vitrage de bâtiments avec des plaques de verre (1) en verre de sécurité feuilleté, à l'aide d'éléments de maintien du verre (5, 6; 10) avec au-moins un plateau d'appui (12) pour des plaques de verre munies de perçages avec compensation de tolérance, ainsi qu'avec des moyens de fixation agissant avec celles-ci, caractérisé par au-moins une plaque de verre (1) et des contre-fiches (2) mettant celle-ci sous tension, reliées à la plaque de verre par des éléments de maintien du verre (5, 6; 10), agissant contre le plan formé par la plaque de verre selon un angle aigu, ainsi que par une contre-fiche d'appui (4) disposée à la jonction des deux contre-fiches, également reliée à la plaque de verre par un élément de maintien du verre (6), la fixation par engagement positif et par adhérence des contre-fiches (2, 4) à la plaque de verre par les éléments de maintien du verre étant conçue de telle sorte que les contre-fiches (2) mettant la plaque de verre sous tension, les contre-fiches (4) et la plaque de verre (1) peuvent être sollicitées par traction et pression.

2. Elément de construction selon la revendication 1, caractérisé en ce que la fixation par engagement positif et par adhérence entre la plaque de verre et les éléments de maintien du verre est réalisée par le fait qu'un espace encore présent entre les bords (16) des perçages dans les plaques de verre (1) et un boulon fileté (22) traversant les éléments de maintien du verre, est entièrement rempli d'une matière plastique (24) modérément fluide, dont la dureté finale après polymérisation est inférieure à la dureté des plaques de verre.

3. Elément de construction selon l'une et l'autre des revendications 1 et 2, caractérisé en ce qu'un second plateau d'appui (21) muni d'un boulon fileté (22) est prévu comme élément de fixation en liaison avec les éléments de maintien du verre, le boulon fileté pouvant être vissé dans un perçage du plateau d'appui (12) susnommé.

4. Elément de construction selon l'une quelconque des revendications 1 à 3, caractérisé en ce qu'une bague en Néoprène (26), d'une dureté Shore d'environ 80, est disposée entre les plateaux d'appui (12, 21) et les panneaux de verre (14, 15) formant la plaque de verre (1).

5. Elément de construction selon la revendication 4, caractérisé en ce que des bagues en caoutchouc silicone (27), d'une dureté Shore d'environ 40, sont disposées entre les plateaux d'appui (12, 21) et les panneaux de verre (14, 15) formant la plaque de verre ainsi que la matière plastique à deux composants (24) à l'intérieur des bagues en Néoprène (26).

6. Elément de construction selon l'une quelconque des revendications 2 à 5, caractérisé en ce que le boulon fileté (22) traversant l'élément de maintien du verre (10) est entouré d'une douille en matière plastique (25) assurant la séparation avec la matière plastique à deux composants (24).

7. Elément de construction selon l'une quelconque des revendications 1 à 6, caractérisé en ce qu'un élargissement en forme de cône tronqué (17), dans lequel est placée une douille en matière plastique (28) de forme appropriée, est prévu dans la vitre extérieure (14) de la plaque de verre (1) composée de deux vitres (14, 15) reliées entre elles par une couche de colle (23), et en ce qu'une vis à tête fraisée, qui peut être vissée dans le plateau d'appui (12) et traversant cette douille, est prévue comme élément de fixation.

8. Elément de construction selon l'une quelconque des revendications 1 à 6, caractérisé en ce que la vitre intérieure (15) de la plaque de verre (1) composée de deux vitres (14, 15) reliées entre elles par une couche de colle (23) présente un élargissement (19) en forme de cône tronqué, dans lequel est placée une douille (28) en matière plastique de forme appropriée, en ce qu'une vis à tête fraisée (20) traversant uniquement cette douille en matière plastique et cette vitre, et pouvant être vissée dans le taraudage du plateau d'appui (12), est prévue comme élément de fixation, et en ce que la vitre extérieure ou de recouvrement (14) de la plaque de verre (1) en verre de sécurité feuilleté est reliée à la vitre intérieure (15) par la couche de colle (23) une fois la fixation effectuée.

9. Elément de construction selon l'une quelconque des revendications 1 à 8, caractérisé en ce que la liaison entre les contre-fiches (2) mettant la plaque de verre sous tension et la plaque de verre (1) par les éléments de maintien du verre (5; 10) est disposée dans des zones de déformation minimale avec une charge homogène de la plaque de verre (1).
